# EUROPEAN PATENT SPECIFICATION

(11) **EP 2 584 163 B1**
(45) Date of publication and mention of the grant of the patent: **23.05.2018**
(21) Application number: 10853210.2
(22) Date of filing: 15.06.2010
(51) Int. Cl.: F01N 3/36, F01N 3/08, F01N 3/025, F02D 13/02, F02D 41/00

(54) **INTERNAL COMBUSTION ENGINE CONTROL DEVICE**
STEUERVORRICHTUNG FÜR EINEN VERBRENNUNGSMOTOR
DISPOSITIF DE COMMANDE DE MOTEUR À COMBUSTION INTERNE

(43) Date of publication of application: 24.04.2013
(73) Proprietor: TOYOTA JIDOSHA KABUSHIKI KAISHA, Toyota-shi, Aichi-ken, 471-8571 (JP)
(72) Inventor: KOGO, Tomoyuki, Toyota-shi, Aichi 471-8571 (JP); OGAWA, Takashi, Toyota-shi, Aichi 471-8571 (JP); ITO, Katsuhiro, Toyota-shi, Aichi 471-8571 (JP); IWATA, Kazuyasu, Toyota-shi, Aichi 471-8571 (JP); ISHIYAMA, Shinobu, Toyota-shi, Aichi 471-8571 (JP); YANASE, Yoshiki, Toyota-shi, Aichi 471-8571 (JP)
(74) Representative: Intès, Didier Gérard André
(86) International application number: PCT/JP2010/060122
(87) International publication number: WO 2011/158328

(56) References cited:
- EP-A2- 1 512 847
- DE-A1- 10 023 420
- JP-A- 2005 106 047
- JP-A- 2009 013 842
- JP-A- 2009 250 125
- US-A1- 2008 209 890

## Description

### Technical Field

The present invention relates to a control apparatus for an internal combustion engine, and more particularly to a control apparatus for an internal combustion engine equipped with a fuel addition valve that adds fuel to exhaust gas.

### Background Art

The conventional technology includes a control apparatus for an internal combustion engine that is equipped with a fuel addition valve that is disclosed, for example, in Patent Literature 1 (Japanese Patent Laid-Open No. 2009-13842). A fuel addition valve is a valve that, for example, when it is necessary to perform a reduction process of an exhaust purification catalyst, adds fuel to exhaust gas on an upstream side of the catalyst. According to the conventional technology, a configuration is adopted that, at a time point at which a predetermined time period has elapsed since fuel addition was last performed, forcibly drives a fuel addition valve irrespective of whether or not a subsequent fuel addition operation is required. Thus, according to the conventional technology, a configuration is adopted that prevents clogging of an injection hole of a fuel addition valve by deposits or the like during a period in which the fuel addition valve is stopped.

The applicants are aware of the following literature, which includes the above described literature, as literature related to the present invention.

### Citation List

### Patent Literature

Patent Literature 1: Japanese Patent Laid-Open No. 2009-13842
Patent Literature 2: Japanese Patent Laid-Open No. 2007-332913
Patent Literature 3: Japanese Patent Laid-Open No. 2008-38825
Patent Literature 4: Japanese Patent Laid-Open No. 2009-13929
Patent Literature 5: Japanese Patent Laid-Open No. 2008-69657

### Summary of Invention

### Technical Problem

According to the above described conventional technology, a configuration is adopted that prevents clogging of an injection hole by driving a fuel addition valve at intervals of a predetermined time period at least. However, according to this configuration there is the problem that there is a risk of fuel being added to exhaust gas even in a situation in which the exhaust purifying capability of a catalyst is insufficient, for example, as in a case where the catalyst temperature is low or the like, thus causing a deterioration in exhaust emissions.

The present invention has been conceived to solve the above described problem, and an object of the present invention is to provide a control apparatus for an internal combustion engine that is capable of preventing clogging of a fuel addition valve while maintaining favorable exhaust emissions.

### Means for Solving the Problem

A first aspect of the present invention is a control apparatus for an internal combustion engine, comprising:
a fuel addition valve that is provided in an exhaust passage of an internal combustion engine and that adds fuel to exhaust gas on an upstream side of an exhaust purification catalyst;
a valve characteristics varying mechanism that is capable of variably setting a valve characteristic of an intake valve and/or an exhaust valve;
clogging prevention means that, to prevent clogging of the fuel addition valve, drives the fuel addition valve at a timing at which addition of fuel to the exhaust purification catalyst is not necessary; and
exhaust control means that, when the clogging prevention means operates, reduces exhaust gas by changing the valve characteristic by means of the valve characteristics varying mechanism.

In a second aspect of the present invention, wherein when a temperature of the exhaust purification catalyst is lower than an activation temperature or when the internal combustion engine is performing a deceleration operation, the exhaust control means reduces exhaust gas accompanying operation of the clogging prevention means.

In a third aspect of the present invention, the control apparatus for an internal combustion engine further comprising inhibition means that inhibits operation of the clogging prevention means and the exhaust control means in a case where exhaust emissions deteriorate due to operation of the exhaust control means.

In a fourth aspect of the present invention, wherein the exhaust control means decreases a working angle of the intake valve to reduce exhaust gas.

In a fifth aspect of the present invention, wherein the exhaust control means retards a valve-opening timing of the intake valve to reduce exhaust gas.

### Advantageous Effects of Invention

According to the first invention, when performing fuel injection for clogging prevention, exhaust gas can be decreased by exhaust control means. As a result, the flow rate (the so-called "space velocity S/V") of exhaust gas with respect to the catalyst volume of the exhaust purification catalyst can be suppressed and the purification performance of the catalyst can be improved. Furthermore, fuel that is injected for clogging prevention can be efficiently purified and exhaust emissions can be maintained at a favorable level. Accordingly, fuel injection can be freely performed and clogging of a fuel addition valve can be reliably prevented even in a situation in which, conventionally, from the viewpoint of exhaust emissions, fuel injection for clogging prevention could not be executed, such as when the catalyst temperature is low or when a deceleration operation is being performed. Furthermore, the exhaust control means can lower an exhaust pressure by reducing exhaust gas. When fuel is injected from the fuel addition valve in a state in which the exhaust pressure is low, a pressure difference between a fuel injection pressure in the injection hole and a pressure (exhaust pressure) at the injection destination increases. Consequently, deposits can be efficiently removed by injecting even a small amount of fuel, and exhaust emissions can be improved with greater reliability.

According to the second invention, even when the catalyst temperature is low or when a deceleration operation is being performed, exhaust emissions can be maintained at a favorable level while injecting a small amount of fuel to prevent clogging. Accordingly, since the timing of fuel injection for clogging prevention need not be restricted, clogging of the fuel addition valve can be reliably prevented.

According to the third invention, when exhaust emissions deteriorate due to operation of the exhaust control means, inhibition means can inhibit operation of clogging prevention means and the exhaust control means. It is therefore possible to avoid a situation in which smoke or the like is generated and exhaust emissions deteriorate due to execution of control that reduces exhaust gas.

According to the fourth invention, the exhaust control means can reduce a working angle of an intake valve. It is thereby possible to reduce a time area (integrated value of a lift amount and an open-valve time period) when the valve is open, and to reduce the amount of exhaust gas and lower the exhaust pressure.

According to the fifth invention, the exhaust control means can retard the valve-opening timing of the intake valve. As a result, since the intake time period can be shortened, the amount of exhaust gas can be reduced and the exhaust pressure can be lowered.

### Brief Description of Drawings

[Figure 1] Figure 1 is an overall configuration diagram for describing the system configuration of Embodiment 1 of the present invention.
[Figure 2] Figure 2 is a characteristics diagram that illustrates valve characteristics that are realized by the VVT and the variable valve mechanisms.
[Figure 3] Figure 3 is a characteristics diagram that illustrates the relation between the space velocity S/V and the exhaust gas purification rate of the catalyst.
[Figure 4] Figure 4 is a timing chart that illustrates a state in which clogging prevention control and exhaust gas reduction control are executed at the time of a deceleration operation.
[Figure 5] Figure 5 is an explanatory view that illustrates the valve timing of an intake valve that is realized by exhaust gas reduction control.
[Figure 6] Figure 6 is a flowchart that illustrates control executed by the ECU according to Embodiment 1 of the present invention.

### Description of Embodiment

### Embodiment 1

### [Configuration of Embodiment 1]

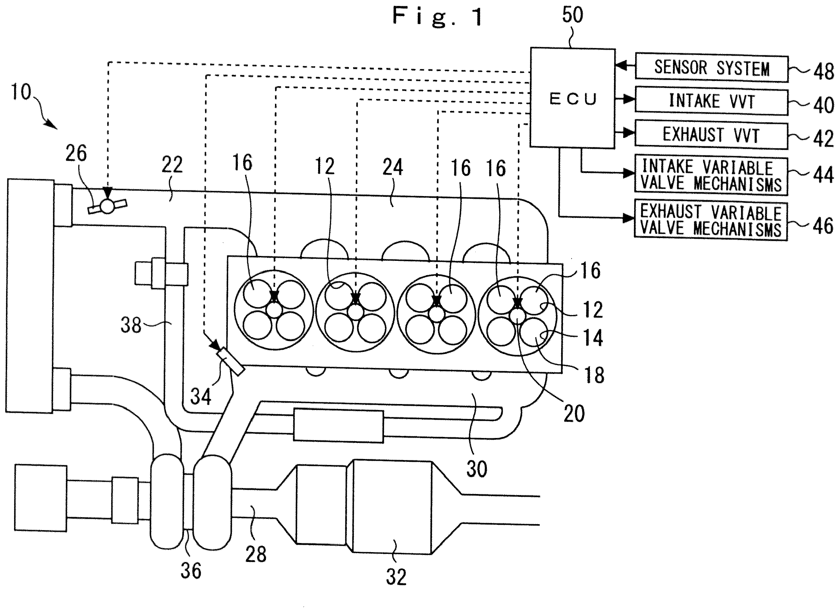

Hereunder, Embodiment 1 of the present invention is described while referring to Figures 1 to 6. Figure 1 is an overall configuration diagram for describing the system configuration of Embodiment 1 of the present invention. The system of the present embodiment includes an engine 10 as an internal combustion engine that is constituted, for example, by a diesel engine. A combustion chamber is formed by a piston (not shown) in each cylinder of the engine 10. Each piston is connected to a crankshaft that is the output shaft of the engine 10. Each cylinder includes two intake ports 12 and two exhaust ports 14, respectively. Each cylinder also includes intake valves 16 that open and close the intake ports 12, exhaust valves 18 that open and close the exhaust ports 14, and a fuel injection valve 20 that injects fuel into the combustion chamber.

The engine 10 includes an intake passage 22 that draws intake air into each cylinder. The intake passage 22 is connected to the intake ports 12 of each cylinder, respectively, through an intake manifold 24 that constitutes one part of the intake passage 22. An electronically controlled throttle valve 26 that adjusts an intake air amount is provided in the intake passage 22. The engine 10 also includes an exhaust passage 28 through which exhaust gas is discharged from each cylinder. The exhaust passage 28 is connected to the exhaust ports 14 of each cylinder, respectively, through an exhaust manifold 30 that constitutes one part of the exhaust passage 28. An exhaust purification catalyst 32 that purifies exhaust gas and a fuel addition valve 34 that adds fuel to exhaust gas on an upstream side of the exhaust purification catalyst 32 are provided in the exhaust passage 28. Furthermore, the engine 10 includes a supercharger 36 that supercharges intake air utilizing an exhaust pressure, and an EGR mechanism 38 that recirculates exhaust gas into the intake system.

The exhaust purification catalyst 32 contains therein, for example, a NOx storage-reduction catalyst that adsorbs NOx contained in exhaust gas or a diesel particulate filter (DPF) that traps particulate matter (PM) contained in exhaust gas. When a NOx adsorption amount or a trapped amount of PM of the exhaust purification catalyst 32 is close to a saturated state, a reduction process is executed that reduces and purifies these substances. When performing a reduction process of the exhaust purification catalyst 32, the fuel addition valve 34 injects (adds) fuel that serves as a reducing agent to the exhaust gas. The fuel addition valve 34 is constituted by, for example, a common fuel injection valve that opens and closes a fuel injection hole by means of a needle valve.

The engine 10 also includes VVT (Variable Valve Timing system) 40 and 42 and variable valve mechanisms 44 and 46 that are arranged in an intake valve system and an exhaust valve system, respectively. Among these components, an intake VVT 40 and an intake variable valve mechanism 44 that are arranged in the intake valve system constitute valve characteristics varying means on the intake side that variably set the valve characteristics (a phase, a working angle, and a lift amount) of the intake valve 16. Further, an exhaust WT 42 and an exhaust variable valve mechanism 46 that are arranged in the exhaust valve system constitute valve characteristics varying means on the exhaust side that variably set the valve characteristics of the exhaust valve 18. The configuration of these mechanisms will now be described. First, the intake valve system is described. The intake valve system includes a camshaft provided with an intake cam, and a timing pulley provided on the camshaft. The timing pulley is connected to the crankshaft via a timing chain. Therefore, while the engine is operating, rotation of the crankshaft is transmitted to the timing pulley through the timing chain, and the camshaft (the intake cam) is rotationally driven by the timing pulley. Thus, when the acting force of the intake cam is transmitted to the intake valve 16 via a rocker arm, the intake valve 16 opens and closes at a predetermined timing in accordance with a rotational angle of the camshaft.

In the intake valve system configured in this manner, the intake VVT 40 has a known structure such as, for example, a structure described in Japanese Patent Laid-Open No. 2000-87769. More specifically, the intake VVT 40 includes an actuator that relatively rotates the camshaft and the timing pulley, and variably sets the phase of the intake valve 16 according to the relative rotation angles of the camshaft and the timing pulley. Meanwhile, the intake variable valve mechanism 44 has a known structure such as, for example, a structure described in Japanese Patent Laid-Open No. 2007-132326. More specifically, the intake variable valve mechanism 44 includes a roller that accepts the acting force of the intake cam, and a swinging arm that transmits the acting force received by the roller to a rocker arm. The roller is connected to a control shaft via a link mechanism. The control shaft is rotationally driven by an actuator. When the control shaft is rotated, the position of the roller is displaced in the length direction of the swinging arm in accordance with the rotational angle of the control shaft. The swinging amount and swinging timing of the swinging arm (that is, the driving amount and driving timing of the rocker arm) with respect to the acting force of the intake cam changes in accordance with the position of the roller. Thus, the intake variable valve mechanism 44 can variably set the working angle and the lift amount of the intake valve 16 in accordance with the rotational angle of the control shaft.

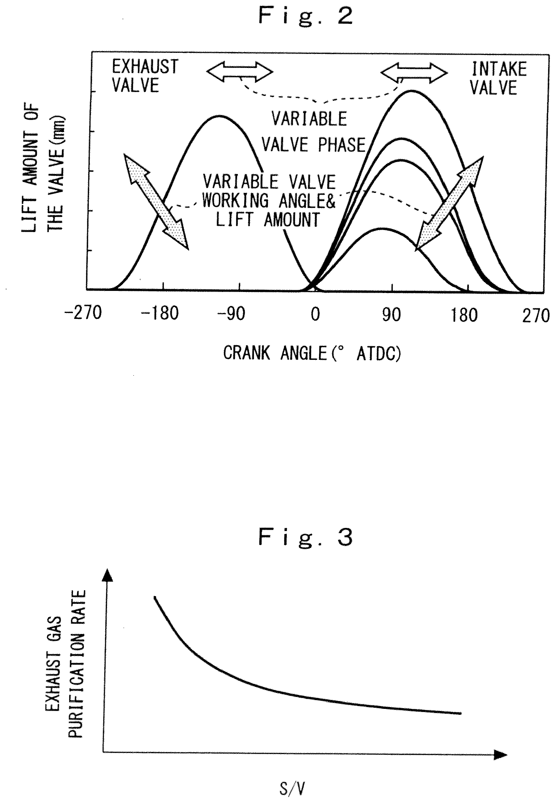

Similarly to the intake valve system, the exhaust valve system of the engine 10 includes a camshaft provided with an exhaust cam, and a timing pulley provided on the camshaft. The exhaust WT 42 and the exhaust variable valve mechanism 46 have the same configuration as the intake VVT 40 and the intake variable valve mechanism 44, respectively. Thus, the exhaust WT 42 changes the relative rotation angles of the camshaft and the timing pulley on the exhaust side, and variably sets the phase of the exhaust valve 18. The exhaust variable valve mechanism 46 variably sets the working angle and the lift amount of the exhaust valve 18 according to the rotational angle of the control shaft on the exhaust side. Figure 2 is a characteristics diagram that illustrates valve characteristics that are realized by the VVT and the variable valve mechanisms. As shown in Figure 2, according to the present embodiment, the valve characteristics of the intake valve 16 and the exhaust valve 18 can be changed. Note that, although according to the present embodiment the variable valve mechanisms 44 and 46 are exemplified as mechanisms that change the working angle and lift amount of valves, the present invention is not limited thereto. For example, a configuration may also be adopted that uses a VVTL (Variable Valve Timing and Lift system) in place of the variable valve mechanisms 44 and 46.

The system of the present embodiment is also equipped with a sensor system 48 that includes various sensors that are required to control the engine 10 and the vehicle in which the engine 10 is mounted, and an ECU (Electronic Control Unit) 50 that controls the operating state of the engine 10. Examples of sensors included in the sensor system 48 include a crank angle sensor that detects a crank angle and a number of engine revolutions, an airflow sensor that detects an intake air amount, a water temperature sensor that detects a temperature of engine cooling water, an air-fuel ratio sensor that detects the exhaust air-fuel ratio, a catalyst temperature sensor that detects the temperature (bed temperature) of the exhaust purification catalyst 32, and an accelerator opening degree sensor that detects an accelerator operation amount (degree of accelerator opening) of the vehicle. The sensor system 48 is connected to the input side of the ECU 50. Further, various actuators including the fuel injection valve 20, the throttle valve 26, the fuel addition valve 34, the VVT 40 and 42, and the variable valve mechanisms 44 and 46 are connected to the output side of the ECU 50.

The ECU 50 controls operation of the engine 10 by driving each actuator based on operational information of the engine that is detected by the sensor system 48. More specifically, the ECU 50 detects the number of engine revolutions and the crank angle based on the output of the crank angle sensor, and detects the intake air amount by means of the airflow sensor. The ECU 50 calculates a fuel injection amount based on the intake air amount and the number of engine revolutions and the like and, after determining the fuel injection timing based on the crank angle, drives the fuel injection valve 20. Further, when it is necessary to perform a reduction process of the exhaust purification catalyst 32, the ECU 50 executes catalytic reduction control that drives the fuel addition valve 34 to add fuel to the exhaust gas. The ECU 50 also executes clogging prevention control and exhaust gas reduction control and the like that are described below.

### [Operations of Embodiment 1]

### (Clogging prevention control)

The injection hole of the fuel addition valve 34 may become clogged due to the build-up of deposits or the like. Therefore, according to the clogging prevention control, when a clogging prevention demand arises in accordance with the operating frequency of the fuel addition valve 34 or the like, even if the timing is one at which fuel addition for a reduction process is unnecessary, the ECU 50 drives the fuel addition valve 34. As a result, deposits or the like that have built-up in the injection hole are detached and removed by a fuel injection pressure, and thus clogging of the injection hole can be prevented. In this connection, for example, when a predetermined time period in which clogging is liable to occur elapses after the fuel addition valve 34 was last driven, the ECU 50 detects such a state as one in which the aforementioned clogging prevention demand has arisen.

### (Exhaust gas reduction control)

The fuel injection amount for the clogging prevention control is set to the necessary minimum injection amount with which clogging of the injection hole can be prevented. Therefore, if the temperature of the exhaust purification catalyst 32 is sufficiently high, the injected fuel is completed purified by the catalyst. However, depending on the situation, a case may arise in which it is desired to execute clogging prevention control even when the catalyst temperature is low or when performing a deceleration operation. When clogging prevention control is executed in such a situation, there is a risk that, because the purification capability of the catalyst is insufficient, the injected fuel will not be completely purified and exhaust smoke or the like will arise and exhaust emissions will deteriorate.

Therefore, according to the present embodiment, a configuration is adopted in which, when executing clogging prevention control, exhaust gas reduction control is also executed together therewith. The exhaust gas reduction control reduces the amount of exhaust gas and lowers the exhaust pressure by changing the valve characteristics of either one of, or both of, the intake valve 16 and the exhaust valve 18. In this connection, setting of the valve characteristics is described specifically later. According to this control, since the amount (flow rate) of exhaust gas can be decreased, as shown in Figure 3, the flow rate of exhaust gas (the so-called "space velocity S/V") with respect to the catalyst volume of the exhaust purification catalyst 32 can be suppressed, and the purification performance (exhaust gas purification rate) of the catalyst can be improved. Figure 3 is a characteristics diagram that illustrates the relation between the space velocity S/V and the exhaust gas purification rate of the catalyst. As shown in Figure 3, there is a characteristic such that the exhaust gas purification rate increases as the space velocity S/V decreases.

Therefore, according to the exhaust gas reduction control, the exhaust gas purification rate can be improved when executing clogging prevention control, and fuel that is injected to remove deposits can be efficiently purified. Thus, exhaust emissions can be maintained at a favorable level while adequately exerting the effect of clogging prevention control. In particular, the above described control can be freely performed even under circumstances in which clogging prevention control could not conventionally be executed from the viewpoint of exhaust emissions, such as a case where the catalyst temperature is low or when a deceleration operation is being performed.

Further, according to the exhaust gas reduction control, the exhaust pressure can be lowered by reducing the exhaust gas. When fuel is injected from the fuel addition valve 34 in a state in which the exhaust pressure is low, a pressure difference between the fuel injection pressure at the injection hole and the pressure at the injection destination (exhaust pressure) increases. As a result, when executing clogging prevention control, an injection pressure that acts on deposits that have built-up in the injection hole can be relatively increased, and deposits can be efficiently removed by injecting even a small quantity of fuel. More specifically, when the object is to obtain a fixed level of removal efficiency, it is possible to relatively reduce a fuel injection amount and enhance exhaust emissions with greater reliability.

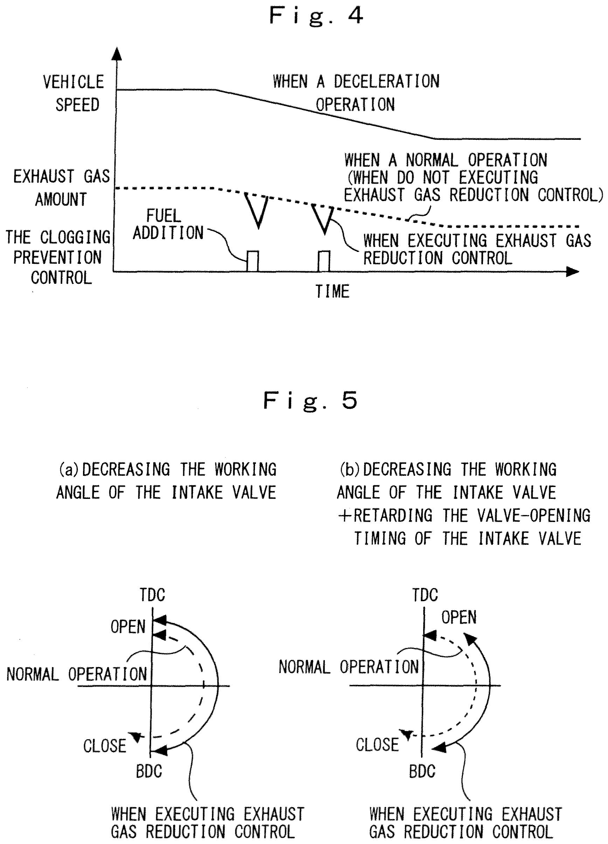

Further, according to the exhaust gas reduction control, when the catalyst temperature is lower than an activation temperature, or when a deceleration operation is being performed, exhaust gas is decreased in accompanying execution of the clogging prevention control. As a result, unlike the conventional technology, since it is not necessary to restrict the timing for executing clogging prevention control, clogging of the fuel addition valve 34 can be reliably prevented. In this respect, Figure 4 is a timing chart that illustrates a state in which clogging prevention control and exhaust gas reduction control are executed at the time of a deceleration operation. As shown in Figure 4, at the time of a deceleration operation, fuel injection is executed by the clogging prevention control, and exhaust gas reduction control is executed concurrently therewith. As a result, when fuel is injected from the fuel addition valve 34, the amount of exhaust gas temporarily decreases with respect to a base gas amount that is shown by a dashed line in Figure 4, and the exhaust pressure decreases in accompaniment therewith. Hence, the above described operational advantages can be obtained. In this connection, the term "base gas amount" refers to an exhaust gas amount at a time of normal operation when exhaust gas reduction control is not being executed.

As described above, the exhaust gas reduction control reduces the amount of exhaust gas and improves the exhaust gas purification rate. However, if there is a shortage of intake air as a result of executing the exhaust gas reduction control, the shortage of intake air may lead to a deterioration in exhaust emissions (for example, a smoke amount may increase). In that case, since the adverse affects will be greater than the effect of the exhaust gas reduction control, it is preferable not to execute the exhaust gas reduction control. Therefore, according to the present embodiment a configuration is adopted that inhibits the execution of clogging prevention control and exhaust gas reduction control in a case where the exhaust emissions will deteriorate if exhaust gas reduction control is executed. A specific example of this control will now be described. First, for example, a lower limit of an intake air amount at which exhaust emissions do not deteriorate even if exhaust gas reduction control is executed is previously determined by experiment and the like. Subsequently, when executing the exhaust gas reduction control, if it is determined that the intake air amount is less than the aforementioned lower limit, execution of the clogging prevention control and the exhaust gas reduction control are inhibited. According to the above described configuration, it is possible to avoid a situation in which smoke or the like is generated due to execution of exhaust gas reduction control and exhaust emissions deteriorate.

Next, specific valve control for reducing exhaust gas is described referring to Figure 5. Figure 5 is an explanatory view that illustrates the valve timing of an intake valve that is realized by exhaust gas reduction control. According to the present embodiment, when performing exhaust gas reduction control, the valve timing (valve characteristics) illustrated in either of Figure 5(a) and Figure 5(b) is realized, and the valve timing of the intake valve 16 is changed with respect to the timing during normal operation. In this connection, the term "timing during normal operation" refers to timing in a state in which exhaust gas reduction control is not being executed, as shown by a dashed line in Figure 5(a) and Figure 5(b).

First, the example illustrated in Figure 5(a) is described. According to this example, a configuration is adopted in which the working angle and lift amount of the intake valve 16 are decreased compared to a time of normal operation by the intake variable valve mechanism 44. As a result, a time area (integrated value of the lift amount and the open-valve time period) when the valve is open can be decreased, the amount of exhaust gas can be reduced, and the exhaust pressure can be lowered. Further, according to the example shown in Figure 5(b), a configuration is adopted in which, while decreasing the working angle and lift amount in a similar manner to the above example, the valve-opening timing of the intake valve 16 is retarded compared to a time of normal operation by the intake WT 40. As a result, in addition to the operational advantages of the example illustrated in Figure 5(a), since the intake time period can be shortened, it is possible to reduce the amount of exhaust gas and lower the exhaust pressure.

In this connection, although the above two examples are described as examples of valve timing control for decreasing exhaust gas according to the present embodiment, the present invention is not limited to these examples. More specifically, according to the exhaust gas reduction control of the present invention, for example, a configuration may also be adopted that only retards the valve-opening timing and does not change the working angle and lift amount of the intake valve. Further, according to the present invention a configuration may also be adopted that decreases exhaust gas by changing the working angle, lift amount, phase (opening and closing timing) and the like of the exhaust valve 18 without changing the valve characteristics of the intake valve 16. Furthermore, with respect to the exhaust gas reduction control, a configuration may also be adopted that changes the valve characteristics of both the intake valve 16 and the exhaust valve 18.

### [Specific processing to realize Embodiment 1]

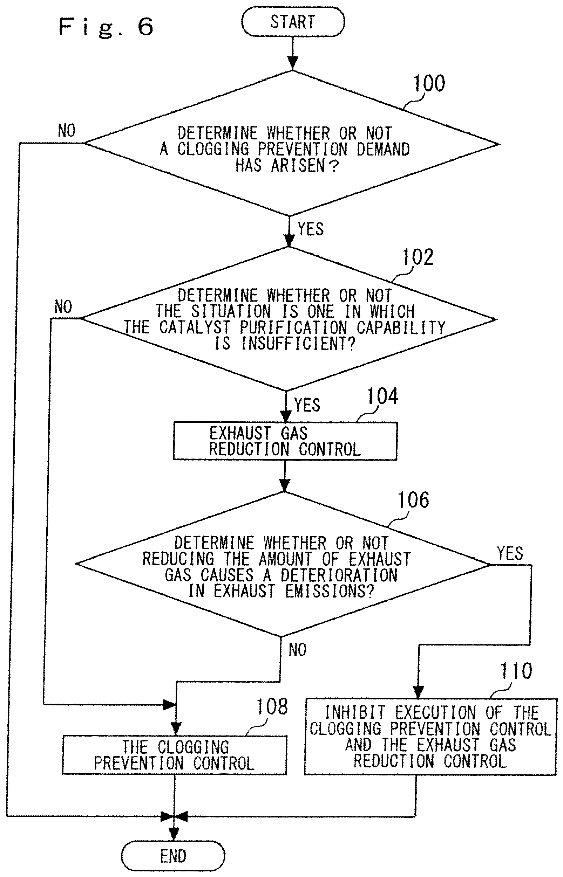

Figure 6 is a flowchart that illustrates control executed by the ECU according to Embodiment 1 of the present invention. The routine shown in Figure 6 is repeatedly executed during operation of the engine. According to the routine shown in Figure 6, first, the ECU 50 determines whether or not a clogging prevention demand has arisen (step 100). Next, the ECU 50 determines whether or not the situation is one in which the catalyst purification capability is insufficient (step 102). More specifically, in step 102, the ECU 50 determines whether or not the catalyst temperature is lower than the activation temperature, and also determines whether or not a deceleration operation is in progress.

If either of the results determined in step 102 is affirmative, since the clogging prevention control can not be performed independently, the ECU 50 first executes the aforementioned exhaust gas reduction control (step 104). Subsequently, for example, based on the intake air amount, the ECU 50 determines whether or not reducing the amount of exhaust gas causes a deterioration in exhaust emissions (step 106). If the result determined in step 106 is negative, the ECU 50 executes the clogging prevention control (step 108). In contrast, if the result determined in step 106 is affirmative, the ECU 50 inhibits execution of the clogging prevention control and the exhaust gas reduction control, and ends the processing (step 110). Meanwhile, if the results determined in step 102 are both negative, since the catalyst temperature is greater than or equal to the activation temperature and a deceleration operation is not in progress, clogging prevention control can be executed independently. Therefore, in this case the operation shifts to step 108.

Note that in the above described Embodiment 1, step 108 in Figure 6 shows a specific example of clogging prevention means, and steps 102 and 104 show specific examples of exhaust control means. Further, steps 106 and 110 show specific examples of inhibition means.

### Description of Reference Numerals

10 engine (internal combustion engine), 12 intake port, 14 exhaust port, 16 intake valve, 18 exhaust valve, 20 fuel injection valve, 22 intake passage, 24 intake manifold, 26 throttle valve, 28 exhaust passage, 30 exhaust manifold, 32 exhaust purification catalyst, 34 fuel addition valve, 36 supercharger, 38 EGR mechanism, 40,42 VVT (valve characteristics varying mechanism), 44,46 variable valve mechanisms (valve characteristics varying mechanism), 48 sensor system, 50 ECU

## Claims

1. A control apparatus for an internal combustion engine (10), comprising:
a fuel addition valve (34) that is provided in an exhaust passage (28) of an internal combustion engine (10) and that adds fuel to exhaust gas on an upstream side of an exhaust purification catalyst (32);
clogging prevention means that, to prevent clogging of the fuel addition valve (34), drives the fuel addition valve (34) at a timing at which addition of fuel to the exhaust purification catalyst (32) is not necessary;
the control apparatus being **characterized in that** it further comprises:
a valve characteristics varying mechanism (40,42, 44,46) that is capable of variably setting a valve characteristic of an intake valve (16) and/or an exhaust valve (18); and
exhaust control means that, when the clogging prevention means operates, reduces exhaust gas by changing the valve characteristic by means of the valve characteristics varying mechanism (40,42, 44,46).

2. The control apparatus for an internal combustion engine (10) according to claim 1, wherein when a temperature of the exhaust purification catalyst (32) is lower than an activation temperature or when the internal combustion engine (10) is performing a deceleration operation, the exhaust control means reduces exhaust gas accompanying operation of the clogging prevention means.

3. The control apparatus for an internal combustion engine (10) according to claim 1 or 2, further comprising inhibition means that inhibits operation of the clogging prevention means and the exhaust control means in a case where exhaust emissions deteriorate due to operation of the exhaust control means.

4. The control apparatus for an internal combustion engine (10) according to any one of claims 1 to 3, wherein the exhaust control means decreases a working angle of the intake valve (16) to reduce exhaust gas.

5. The control apparatus for an internal combustion engine (10) according to any one of claims 1 to 4, wherein the exhaust control means retards a valve-opening timing of the intake valve (16) to reduce exhaust gas.

## Patentansprüche

1. Steuervorrichtung für eine Verbrennungskraftmaschine (10), umfassend:
ein Kraftstoffzufuhrventil (34), das in einem Auslasstrakt (28) der Verbrennungskraftmaschine (10) vorgesehen ist und Abgas Kraftstoff auf einer stromaufwärtigen Seite eines Abgasreinigungskatalysators (32) zuführt,
ein Mittel zur Verhinderung von Verstopfung, das zum Verhindern von Verstopfung des Kraftstoffzufuhrventils (34) das Kraftstoffzufuhrventil (34) zu einem Zeitpunkt ansteuert, zu dem Kraftstoffzufuhr in den Abgasreinigungskatalysator (32) nicht notwendig ist,
wobei die Steuervorrichtung **dadurch gekennzeichnet ist, dass** sie ferner umfasst:
einen Ventileigenschaftsänderungsmechanismus (40, 42, 44, 46), der in der Lage ist, eine Ventileigenschaft eines Einlassventils (16) und/oder eines Auslassventils (18) unterschiedlich einzustellen, und
ein Auslasssteuerungsmittel, das bei Betrieb des Mittels zur Verhinderung von Verstopfung Abgas durch Ändern der Ventileigenschaft mittels des Ventileigenschaftsänderungsmechanismus (40, 42, 44, 46) reduziert.

2. Steuervorrichtung für eine Verbrennungskraftmaschine (10) nach Anspruch 1, wobei das Abgassteuerungsmittel, wenn eine Temperatur des Abgasreinigungskatalysators (32) unter einer Aktivierungstemperatur liegt oder wenn die Verbrennungskraftmaschine (10) einen Entschleunigungsvorgang durchführt, Abgas, das bei Betrieb des Mittels zur Verhinderung von Verstopfung erzeugt wird, reduziert.

3. Steuervorrichtung für eine Verbrennungskraftmaschine (10) nach Anspruch 1 oder 2, die ferner ein Unterdrückungsmittel umfasst, das den Betrieb des Mittels zur Verhinderung von Verstopfung und des Abgassteuerungsmittels in einem Fall unterdrückt, bei dem sich Abgasemissionen aufgrund des Betriebs des Abgassteuerungsmittels verschlechtern.

4. Steuervorrichtung für eine Verbrennungskraftmaschine (10) nach einem der Ansprüche 1 bis 3, wobei das Abgassteuerungsmittel einen Arbeitswinkel des Einlassventils (16) zum Reduzieren des Abgases verringert.

5. Steuervorrichtung für eine Verbrennungskraftmaschine (10) nach einem der Ansprüche 1 bis 4, wobei das Abgassteuerungsmittel einen Ventilöfifnungszeitpunkt des Einlassventils (16) zum Reduzieren des Abgases verzögert.

## Revendications

1. Appareil de commande pour un moteur à combustion interne (10), comprenant :
une soupape d'ajout de carburant (34) qui est prévue dans un passage d'échappement (28) d'un moteur à combustion interne (10) et qui ajoute du carburant aux gaz d'échappement d'un côté amont d'un catalyseur de purification d'échappement (32) ;
un moyen anti-obstruction qui, pour empêcher une obstruction de la soupape d'ajout de carburant (34), déclenche la soupape d'ajout de carburant (34) à un moment auquel l'ajout de carburant au catalyseur de purification d'échappement (32) n'est pas nécessaire ;
l'appareil de commande étant **caractérisé en ce qu'**il comprend en outre :
un mécanisme de variation de caractéristiques de soupape (40, 42, 44, 46) qui est capable de définir de manière variable une caractéristique de soupape d'une soupape d'admission (16) et/ou d'une soupape d'échappement (18) ; et
un moyen de commande d'échappement qui, lorsque le moyen anti-obstruction fonctionne, réduit les gaz d'échappement en changeant la caractéristique de soupape à l'aide du mécanisme de variation de caractéristiques de soupape (40, 42, 44, 46).

2. Appareil de commande pour un moteur à combustion interne (10) selon la revendication 1, dans lequel, lorsqu'une température du catalyseur de purification d'échappement (32) est inférieure à une température d'activation ou lorsque le moteur à combustion interne (10) effectue une opération de décélération, le moyen de commande d'échappement réduit les gaz d'échappement qui accompagnent le fonctionnement du moyen anti-obstruction.

3. Appareil de commande pour un moteur à combustion interne (10) selon la revendication 1 ou 2, comprenant en outre un moyen d'inhibition qui empêche le fonctionnement du moyen anti-obstruction et du moyen de commande d'échappement dans le cas où les émissions d'échappement se détériorent en raison du fonctionnement du moyen de commande d'échappement.

4. Appareil de commande pour un moteur à combustion interne (10) selon l'une quelconque des revendications 1 à 3, dans lequel le moyen de commande d'échappement diminue un angle de fonctionnement de la soupape d'admission (16) afin de réduire les gaz d'échappement.

5. Appareil de commande pour un moteur à combustion interne (10) selon l'une quelconque des revendications 1 à 4, dans lequel le moyen de commande d'échappement retarde un moment d'ouverture de soupape de la soupape d'admission (16) afin de réduire les gaz d'échappement.
